# EUROPEAN PATENT SPECIFICATION

(11) **EP 0 521 987 B1**
(45) Date of publication and mention of the grant of the patent: **14.02.1996**
(21) Application number: 91906990.6
(22) Date of filing: 27.03.1991
(51) Int. Cl.: F16F 7/10, B60G 13/16, B60G 15/04, B60K 5/12

(54) **VIBRATION ATTENUATING MEANS**
Schwingungsdämpfungsvorrichtung
MOYEN D'ATTENUATION DE VIBRATIONS

(30) Priority: 27.03.1990 GB 9006786
(43) Date of publication of application: 13.01.1993
(73) Proprietor: ROVER GROUP LIMITED, Bickenhill Birmingham B37 7HQ (GB)
(72) Inventor: Knight, Robert Joseph, GB-Coventry CV8 8AA (GB)
(86) International application number: GB9100470
(87) International publication number: WO9114882

(56) References cited:
- EP-A- 0 183 197
- DE-A- 3 431 324
- FR-A- 815 014
- GB-A- 2 071 266
- US-A- 2 744 749
- US-A- 3 068 022
- US-A- 4 456 213

## Description

This invention relates to vibration attenuating means whereby, in connecting a vibrating body to another body the transmission of vibrations to the other body is reduced.

It is well known, see for example "The Motor Vehicle" tenth edition page 707 published by Butterworths, to provide a vehicle suspension system comprising a wheel connected to a body of the vehicle by a suspension link, a spring interposed between the body and the wheel to support the weight of the vehicle and a suspension damper connecting the wheel to the body.

Vibration attenuating means in the form of flexible or elastic mountings or connecting devices are commonly employed to reduce the transmission of vibrations from one body to another, for example in mounting a vehicle on its wheels. Often such devices use simple elastic connections with little inherent damping, the elements having such a stiffness or rigidity as to avoid resonance between the bodies within the range of likely disturbing frequencies.

To reduce vibration transmissions still further at a particular frequency a dynamic absorber is sometimes used in addition to the elastic devices but such absorbers may require heavy absorber masses to be effective. For example it is known from US Patent number 2,744,749 to provide a vehicle suspension system comprising a wheel which is subject to vibration connected to a body of the vehicle by a suspension link and being further connected to the body through vibration attenuating means by which the transmission of vibrations from the wheel to the body is attenuated.

In the connection between two bodies it is usually required to provide a given static stiffness having regard to the application.

An object of the invention is to reduce the transmission of vibration forces from one body to the other above a chosen vibration frequency whilst maintaining the desired static stiffness.

According to the invention there is provided a vehicle suspension system comprising a wheel connected to a body of the vehicle by a suspension link, a spring interposed between the body and the suspension link to support the weight of the vehicle and a suspension damper further connecting the wheel to the body, characterised in that a vibration attenuating means by which the transmission of vibrations from the wheel to the body is attenuated is interposed between the suspension damper and the body, the vibration attenuating means comprising of an arm having at or towards one end a mass, a first connection located at an intermediate position along the arm for connecting the arm to the wheel by means of the suspension damper and at least one elastic connection at a position on the arm remote from said mass for connecting the arm to the body.

The second connection may include a torsion spring acting as an elastic connection between the arm and the body.

There may be provided two elastic connections displaced from one another along the arm at positions on the arm remote from said mass to connect the arm to the body.in which case both of said connections may be elastic and made from elastomeric material to provide flexibility.

In the vibration attenuating means the combined mass and polar moment of inertia of the mass, the stiffness/elasticity of the lever and its connections and the centre distances from the mass to the connections are located and selected according to the desired resonant frequency, attenuation characteristics and static stiffness.

Elastic connections may be formed of any suitable elastomeric material such as rubber and may be bonded to metal or otherwise secured. The elastomeric material may be loaded in tension, compression or in shear.

Further features of the invention will appear from the following description of various embodiments of the invention given by way of example only and in which:
Figs.1 is a side elevation of the rear suspension of a motor vehicle according to the invention having a suspension damper mounting means similar to that illustrated in Figs. 2 and 3;
Fig. 2 is a side elevation of a practical embodiment of a suspension damper mounting means for use in a vehicle suspension system according to the invention;
Fig. 3 is a plan view of the embodiment of Fig. 2; and
Fig. 4 is a graph showing the vibrational characteristics of the Fig. 1 embodiment compared with a conventional suspension.

Referring to the drawings there is shown an arrangement in which two bodies 5 and 13 are interconnected by vibration attenuating means comprising a lever 2 on one end of which is carried a mass or weight 1.

The lever 2 is connected to the body 13 by means of a connection in the form of a vehicle damper 6 located part way along the lever 2.

The body 5 is connected to the lever 2 through elastic connections 3 and 4 which are located displaced from the connection of the body 13 to the lever 2 towards the end remote from the mass 1.

In this arrangement the body 13 may be subject to vibrations and the body 5 insulated from such vibrations.

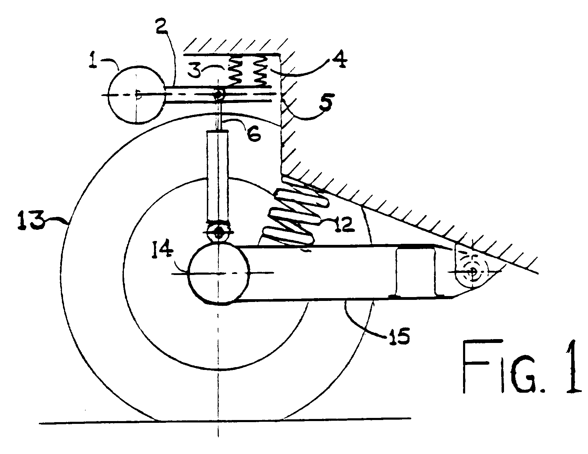

With special reference to Fig. 1 there is shown an embodiment of the invention incorporated into the rear suspension of a motor vehicle.

The vibrating body is constituted by a wheel 13 having a wheel hub 14 which is connected to the arm 2 by the suspension damper 6 which is of known form. Conventional suspension springs 12 are also provided between the body 5 and a suspension lever 15 pivotally attached to the vehicle body 5 in a known manner.

A vibration attenuating means is located between the damper 6 and the body 5 by the provision of the lever arm 2, mass 1 and the elastic connecting means 3 and 4, all as previously described.

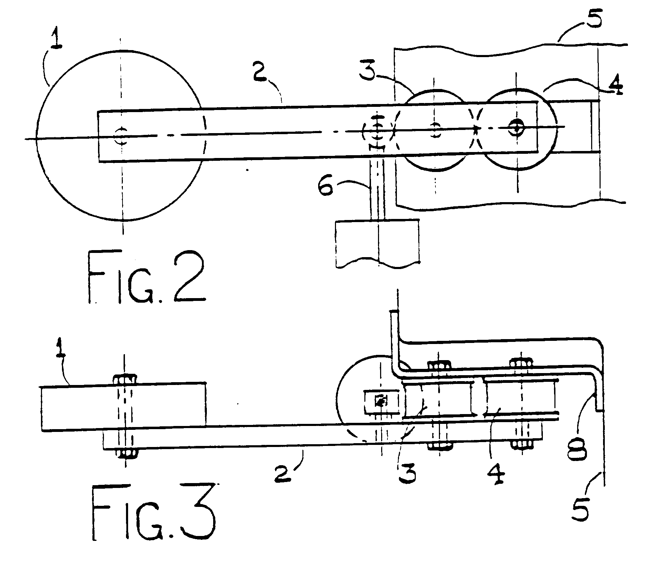

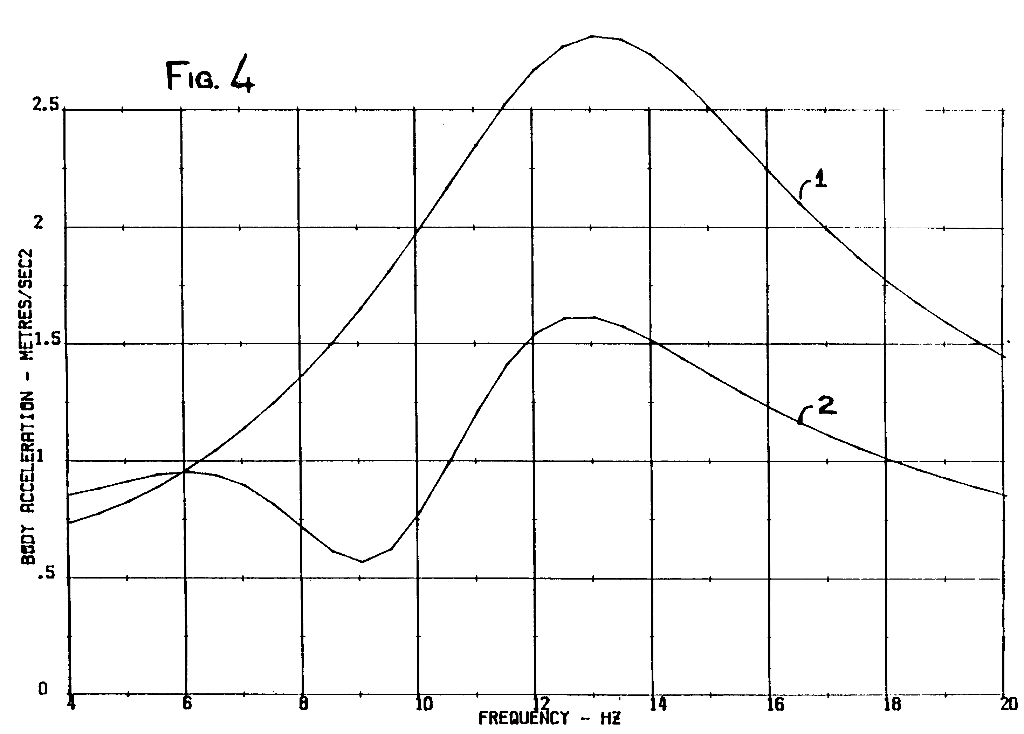

The connecting means 3 and 4 may be of the form shown in Figs. 2 and 3 to give the desired attenuation characteristics.

In Figs. 2 and 3 the connections 3 and 4 are elastic and comprise conventional bonded rubber units having linear and torsional elasticity in the vertical plane.

The connections 3 and 4 are attached to the body 5 by means of a bracket 8 and it is the body 5 that is to be insulated from vibration.

High road excited forces are normally transmitted to the vehicle body by the suspension damper 6 especially when vertical resonance of the unsprung mass of the tyre occurs. These forces are usually most apparent at road excited frequencies above 6Hz, and therefore attenuation above that frequency is desirable. Also the mounting characteristics must ensure that the damper is fully effective in damping the vertical resonance of the unsprung mass at about 14Hz.

Referring now to Fig. 4 this shows for the Fig. 1 embodiment the vertical acceleration of the vehicle body measured at rear axle centre line, excitation being a vertical input under the rear tyres of 0.25 centimetres sinusoidal amplitude. Curve 1 shows the vertical response of a car having conventional rear damper mountings, and curve 2 is that of the same vehicle fitted with assembly according to Fig. 1 showing attenuation above 6Hz.

It will be seen that the arrangement of Fig. 1 could also be adapted to connect the front dampers of a vehicle to the body.

In an alternative arrangement the pivotal connection 4 is an elastic connection which may include a torsion spring whereby pivoting is resiliently resisted.

In each of the described embodiments the combined mass and polar moments of inertia of the mass 1 and the lever 2, the rigidity/elasticity of the lever 2 and of its connections, and the centre distances from the mass 1 to each of the connections all affect the resonant frequency of the assembly and the attenuation characteristics of the device. It is also necessary to have regard to the desired static stiffness of the device. These characteristics are optimised by computer simulation in order to obtain the desired attenuation characteristics for the application. Such simulation is within the scope of a person practised in the field of vibration dynamics.

## Claims

1. A vehicle suspension system comprising a wheel (13) connected to a body (5) of the vehicle by a suspension link (15), a spring (12) interposed between the body (5) and the suspension link (15) to support the weight of the vehicle and a suspension damper (6) further connecting the wheel (2) to the body (5), characterised in that a vibration attenuating means by which the transmission of vibrations from the wheel (13) to the body (5) is attenuated is interposed between the suspension damper(6) and the body (5), the vibration attenuating means comprising of an arm (2) having at or towards one end a mass (1), a first connection located at an intermediate position along the arm (2) for connecting the arm (2) to the wheel (13) by means of the suspension damper (6) and at least one elastic connection (4) at a position on the arm (2) remote from said mass (1) for connecting the arm (2) to the body (5).

2. A vehicle suspension system as claimed in Claim 1 characterised in that said elastic connection includes a torsion spring (4) acting as the elastic connection between the arm (2) and the body (5).

3. A vehicle suspension system as claimed in Claim 1 or in Claim 2 characterised in that there are two elastic connections (3,4) displaced from one another along the arm (2) at positions on the arm (2) remote from said mass (1) to connect the arm (2) to the body (5).

4. A vehicle suspension system as claimed in Claim 3 characterised in that both of said elastic connections (3,4) are made from elastomeric material to provide flexibility.

## Patentansprüche

1. Fahrzeugaufhängungssystem, das ein Rad (13), das mit einem Körper (5) des Fahrzeuges durch einen Aufhängungslenker (15) verbunden ist, eine Feder (12), die zwischen dem Körper (5) und dem Aufhängungslenker (15) angeordnet ist, um das Gewicht des Fahrzeuges abzustützen, sowie einen Aufhängungsdämpfer (6) umfaßt, der das Rad (2) weiterhin mit dem Körper (5) verbindet, dadurch gekennzeichnet, daß ein Schwingungsdämpfungsmittel, durch das die Übertragung von Schwingungen vom Rad (13) auf den Körper (5) gedämpft wird, zwischen dem Aufhängungsdämpfer (6) und dem Körper (5) angeordnet ist, wobei das Schwingungsdämpfungsmittel einen Arm (2), der an einem Ende oder zu einem Ende hin eine Masse (1) aufweist, eine erste Verbindung, die in einer Zwischenposition am Arm (2) angeordnet ist, um den Arm (2) mit dem Rad (13) mit Hilfe des Aufhängungsdämpfers (6) zu verbinden, sowie zumindest eine elastische Verbindung (4) umfaßt, die in einer von der genannten Masse (1) entfernten Position am Arm (2) vorgesehen ist, um den Arm (2) mit dem Körper (5) zu verbinden.

2. Fahrzeugaufhängungssystem nach Anspruch 1, dadurch gekennzeichnet, daß die genannte elastische Verbindung eine Torsionsfeder (4) umfaßt, die als die elastische Verbindung zwischen dem Arm (2) und dem Körper (5) dient.

3. Fahrzeugaufhängungssystem nach Anspruch 1 oder Anspruch 2, dadurch gekennzeichnet, daß zwei elastische Verbindungen (3, 4) vorgesehen sind, die am Arm (2) gegeneinander versetzt in von der genannten Masse (1) entfernten Positionen am Arm (2) angeordnet sind, um den Arm (2) mit dem Körper (5) zu verbinden.

4. Fahrzeugaufhängungssystem nach Anspruch 3, dadurch gekennzeichnet, daß beide der genannten elastischen Verbindungen (3, 4) aus elastomerem Material bestehen, um für Flexibilität zu sorgen.

## Revendications

1. Système de suspension pour véhicule comprenant une roue (13) raccordée à un corps (5) du véhicule par un bras de suspension (15), un ressort (12) interposé entre le corps (5) et le bras de suspension (15) pour supporter le poids du véhicule et un amortisseur de suspension (6) raccordant en outre la roue (2) au corps (5), caractérisé en ce que des moyens d'atténuation de vibrations, par lesquels la transmission de vibrations de la roue (13) au corps (5) est atténuée, sont interposés entre l'amortisseur de suspension (6) et le corps (5), les moyens d'atténuation de vibrations comprenant un bras (2) ayant à ou vers une extrémité une masse (1), une première liaison située à une position intermédiaire le long du bras (2) pour raccorder le bras (2) à la roue (13) au moyen de l'amortisseur de suspension (6) et au moins une liaison élastique (4) à une position sur le bras (2) éloignée de ladite masse (1) pour raccorder le bras (2) au corps (5).

2. Système de suspension pour véhicule suivant la revendication 1, caractérisé en ce que ladite liaison élastique comprend un ressort de torsion (4) agissant comme la liaison élastique entre le bras (2) et le corps (5).

3. Système de suspension pour véhicule suivant la revendication 1 ou la revendication 2, caractérisé en ce qu'il y a deux liaisons élastiques (3, 4) déplacées l'une de l'autre le long du bras (2) à des positions sur le bras (2) éloignées de ladite masse (1) pour raccorder le bras (2) au corps (5).

4. Système de suspension pour véhicule suivant la revendication 3, caractérisé en ce que lesdites deux liaisons élastiques (3, 4) sont réalisées à partir d'une matière élastomère pour offrir de la flexibilité.
